# FASCICULE DE BREVET EUROPEEN

(11) **EP 3 084 116 B1**
(45) Date de publication et mention de la délivrance du brevet: **05.09.2018**
(21) Numéro de dépôt: 14821618.7
(22) Date de dépôt: 19.12.2014
(51) Int. Cl.: E21B 28/00, E21B 43/00, H01G 4/38

(54) **OUTIL DE STIMULATION DE PUITS COMPORTANT DES ÉLÉMENTS CAPACITIFS ÉLECTRIQUEMENT EN PARALLÈLE**
WERKZEUG ZUR STIMULATION VON BOHRLÖCHERN MIT ELEKTRISCH PARALLELEN KAPAZITIVEN ELEMENTEN
TOOL FOR THE STIMULATION OF WELLS COMPRISING CAPACITIVE ELEMENTS ELECTRICALLY IN PARALLEL

(30) Priorité: 20.12.2013 FR 1363228
(43) Date de publication de la demande: 26.10.2016
(73) Titulaire: ENE29 S.à r.l., 1931 Luxembourg (LU)
(72) Inventeur: DELCHAMBRE, Michael, F-31100 Toulouse (FR); MONCHO, Salvador, F-92240 Malakoff (FR)
(74) Mandataire: Ipside
(86) Numéro de dépôt international: PCT/EP2014/078693
(87) Numéro de publication internationale: WO 2015/091927

(56) Documents cités:
- EP-A2- 2 426 311
- DE-A1-102004 039 231
- US-A1- 2005 168 911
- US-B1- 6 549 098

## Description

### DOMAINE TECHNIQUE

La présente invention appartient au domaine de la stimulation de puits, et concerne plus particulièrement un outil de stimulation de puits.

Par « stimulation de puits », on entend générer une onde de choc acoustique dans un puits naturel ou de forage. Une stimulation de puits permet notamment d'améliorer la production d'un puits d'extraction de ressource souterraine (pétrole, gaz naturel, eau, etc.), d'effectuer une étude sismologique en mesurant l'onde acoustique (par exemple au moyen d'un capteur acoustique en surface), de réaliser une fracturation de roche souterraine, etc.

### ÉTAT DE LA TECHNIQUE

Il est connu, dans le domaine de la stimulation de puits, d'utiliser un dispositif comportant un outil de forme allongée adapté à être inséré dans un puits obtenu par forage. De tels dispositifs de stimulation sont connus par exemple :
- du brevet US 4345650, qui décrit un dispositif de stimulation mis en oeuvre pour améliorer la production d'un puits d'extraction de ressource souterraine,
- de la demande internationale de brevet WO9013830, qui décrit un dispositif de stimulation mis en oeuvre pour effectuer une étude sismologique,
- du brevet US4479680, qui décrit un dispositif de stimulation mis en oeuvre pour réaliser une fracturation de roche souterraine;
- du brevet EP2426311, qui décrit un outil de stimulation de puits comportant éléments capacitifs électriquement en parallèle.

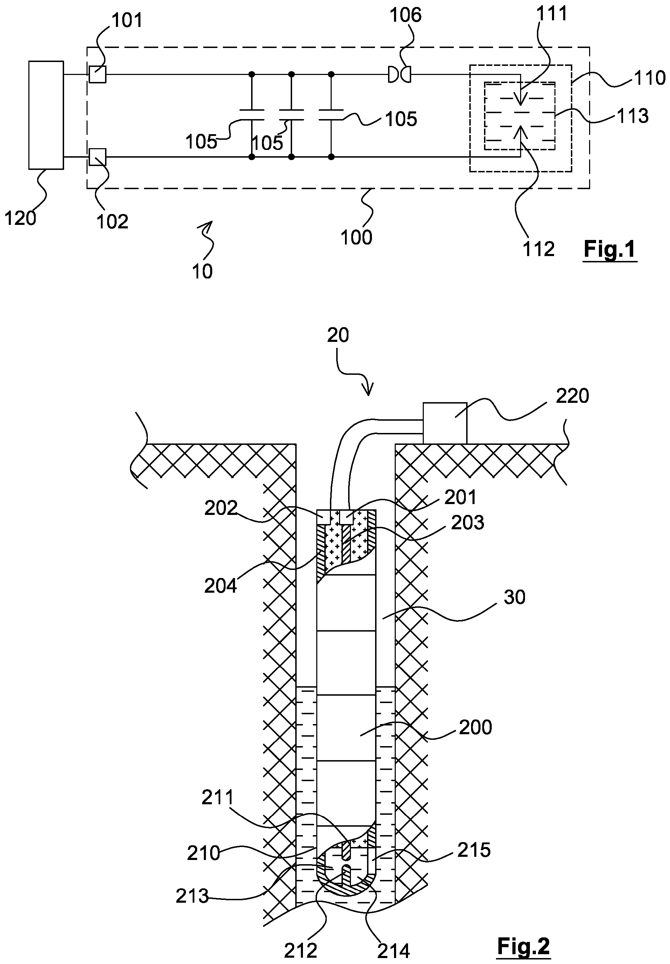

La figure 1 représente un schéma électrique d'un exemple de dispositif 10 de stimulation comportant un outil 100 selon l'art antérieur.

Tel qu'illustré par la figure 1, l'outil 100 comporte une tête de stimulation 110 se présentant sous la forme d'une cavité 113 fermée à l'intérieur de laquelle débouchent une première électrode 111 et une seconde électrode 112. La première électrode 111 et la seconde électrode 112 sont séparées par de l'eau confinée à l'intérieur de ladite cavité 113.

La première électrode 111 et la seconde électrode 112 sont reliées respectivement à une première borne 101 et une seconde borne 102 de l'outil 100, à l'extérieur de la cavité 113 de la tête de stimulation 110. L'outil 100 comporte en outre un ensemble d'éléments capacitifs 105 qui sont montés électriquement en parallèle entre eux et avec la tête de stimulation 110.

L'outil 100 illustré par la figure 1 comporte également un éclateur 106 agencé entre les éléments capacitifs 105 et la tête de stimulation 110. L'éclateur 106 comporte principalement deux états :
- un état ouvert dans lequel les éléments capacitifs 105 sont déconnectés de la tête de stimulation 110, de sorte qu'aucun courant électrique ne peut circuler entre lesdits éléments capacitifs 105 et ladite tête de stimulation 110,
- un état fermé dans lequel les éléments capacitifs 105 sont connectés à la tête de stimulation 110, de sorte qu'un courant électrique peut circuler entre lesdits éléments capacitifs 105 et ladite tête de stimulation 110.

Ainsi, en connectant une source électrique 120 à la première borne 101 et à la seconde borne 102 de l'outil 100, les éléments capacitifs 105 se chargent lorsque l'éclateur 106 est dans l'état ouvert, jusqu'à obtenir une tension prédéfinie aux bornes de l'ensemble desdits éléments capacitifs 105. L'éclateur 106 passe alors dans l'état fermé, et la tension aux bornes des éléments capacitifs est appliquée à la tête de stimulation 110. Les éléments capacitifs 105 se déchargent, à travers la tête de stimulation, en faisant circuler une impulsion de courant de forte intensité (pouvant dépasser la centaine de kilo-ampères) dans le fluide séparant la première électrode 111 de la seconde électrode 112. Cette impulsion de courant de forte intensité crée une onde de choc acoustique qui se propage dans le puits, par exemple par l'intermédiaire d'une paroi flexible de la cavité 113. Une telle onde de choc acoustique peut permettre, notamment, d'améliorer la production d'un puits d'extraction de ressource souterraine, d'effectuer une étude sismologique, de réaliser une fracturation de roche souterraine, etc.

Lors des opérations de stimulation d'un puits, l'outil 100 est inséré dans ledit puits avec la tête de stimulation 110 vers le bas, et est descendu jusqu'au point où la stimulation doit être effectuée. Une fois le point de stimulation atteint, le puits peut être stimulé par des charges / décharges successives des éléments capacitifs 105.

Toutefois, une difficulté de conception de l'outil 100 provient du fait que les niveaux de tension électrique considérés sont très élevés (plusieurs dizaines de kilovolts), afin stimuler de manière efficace le puits, tandis que ledit outil doit être relativement étroit (diamètre de l'ordre de la dizaine de centimètres), afin d'en permettre l'insertion dans un puits obtenu par forage. Par conséquent, il y a un risque important de formation d'arcs électriques à l'intérieur de l'outil 100, en amont de la tête de stimulation 110.

### EXPOSÉ DE L'INVENTION

La présente invention a pour objectif de proposer un agencement des éléments capacitifs de l'outil qui permette de limiter le risque de formation d'arcs électriques à l'intérieur de l'outil.

A cet effet, la présente invention concerne un outil de stimulation de puits comportant un port d'alimentation électrique, une tête de stimulation et au moins deux éléments capacitifs entre ledit port d'alimentation et ladite tête de stimulation, chaque élément capacitif comportant deux bornes de polarités respectives différentes agencées sur des faces de connexion respectives opposées dudit élément capacitif, les bornes de même polarité desdits éléments capacitifs étant connectées entre elles de sorte que lesdits éléments capacitifs sont électriquement en parallèle. En outre, les éléments capacitifs de l'outil sont agencés en série avec leurs faces de connexion en regard, et de telle sorte que les faces de connexion en regard de chaque paire d'éléments capacitifs adjacents correspondent à des bornes de même polarité.

Ainsi, du fait que les éléments capacitifs sont agencés en série avec leurs faces de connexion en regard, on comprend que la distance minimale entre bornes d'éléments capacitifs distincts correspond à la distance entre les bornes agencées sur les faces de connexion en regard de chaque paire d'éléments capacitifs adjacents. Toutefois, celles-ci étant de même polarité, il n'y aucun risque de formation d'arc électrique. La distance minimale entre bornes de polarités différentes d'éléments capacitifs distincts est en outre supérieure à la longueur d'un élément capacitif.

Dans des modes particuliers de réalisation, l'outil de stimulation peut comporter l'une ou plusieurs des caractéristiques suivantes, prises isolément ou selon toutes les combinaisons techniquement possibles.

Dans des modes particuliers de réalisation, les bornes distantes de même polarité de chaque paire d'éléments capacitifs adjacents sont reliées par au moins une liaison s'étendant le long de ladite paire d'éléments capacitifs adjacents.

Dans des modes particuliers de réalisation, l'outil de stimulation comporte au moins trois éléments capacitifs, et les liaisons reliant les bornes de polarités différentes d'un même élément capacitif à des bornes respectives d'autres éléments capacitifs sont espacées radialement d'un angle égal ou supérieur à 60°.

Dans des modes particuliers de réalisation, les bornes distantes de même polarité de chaque paire d'éléments capacitifs adjacents sont reliées par deux liaisons s'étendant le long de ladite paire d'éléments capacitifs adjacents et espacées radialement d'un angle égal à 180° ou compris entre 10° et 90°.

Dans des modes particuliers de réalisation, l'outil de stimulation comporte des moyens d'isolation électrique entre chaque liaison de chaque paire d'éléments capacitifs adjacents et des moyens de connexion électrique des bornes de même polarité des faces de connexion en regard de ladite paire d'éléments capacitifs adjacents.

Dans des modes particuliers de réalisation, chaque liaison reliant les bornes distantes de même polarité de chaque paire d'éléments capacitifs adjacents est rigide.

Dans des modes particuliers de réalisation, chaque liaison reliant les bornes distantes de même polarité de chaque paire d'éléments capacitifs adjacents est flexible, et les éléments capacitifs sont maintenus à l'intérieur d'une paroi périphérique rigide de l'outil par une résine.

Dans des modes particuliers de réalisation, les bornes de même polarité en regard de chaque paire d'éléments capacitifs adjacents sont reliées par des moyens de connexion électrique flexibles.

Dans des modes particuliers de réalisation, l'outil de stimulation comporte des entretoises entre les éléments capacitifs adjacents.

Dans des modes particuliers de réalisation, les éléments capacitifs sont agencés à l'intérieur d'une paroi périphérique électriquement conductrice de l'outil, et ledit outil comporte des moyens d'isolation électrique entre ladite paroi périphérique et lesdits éléments capacitifs.

Dans des modes particuliers de réalisation, l'outil est formé par une pluralité de tronçons assemblés bout à bout de manière réversible, l'un des tronçons comportant plusieurs des éléments capacitifs de l'outil.

Selon un second aspect, la présente invention concerne un dispositif de stimulation comportant un outil de stimulation selon l'un quelconque des modes de réalisation de l'invention, une source électrique connectée à une première borne et à une seconde borne du port d'alimentation, et des moyens de commutation adaptés à placer l'outil dans au moins deux états :
- un état de charge dans lequel chaque élément capacitif et la tête de stimulation sont électriquement en série entre la première borne et la seconde borne du port d'alimentation, de sorte que la source électrique charge chaque élément capacitif à travers la tête de stimulation,
- un état de décharge dans lequel chaque élément capacitif se décharge à travers la tête de stimulation.

Dans des modes particuliers de réalisation, le dispositif de stimulation comporte des moyens de diagnostic adaptés à déterminer un état de la tête de stimulation en fonction d'un paramètre représentatif de la résistance de la tête de stimulation.

### PRÉSENTATION DES FIGURES

L'invention sera mieux comprise à la lecture de la description suivante, donnée à titre d'exemple nullement limitatif, et faite en se référant aux figures qui représentent :
- Figure 1 : déjà décrite, un schéma électrique d'un exemple de réalisation d'un dispositif de stimulation de puits d'extraction de ressource souterraine selon l'art antérieur,
- Figure 2 : une vue en demi-coupe d'un dispositif de stimulation en position dans un puits d'extraction de ressource souterraine,
- Figure 3 : un schéma électrique d'un exemple de réalisation d'un dispositif de stimulation selon l'invention,
- Figure 4 : une vue partielle en coupe d'un exemple de réalisation d'un outil d'un dispositif de stimulation selon l'invention,
- Figure 5 : une vue partielle en perspective d'une variante de réalisation d'un outil d'un dispositif de stimulation selon l'invention.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

La figure 2 représente schématiquement un exemple de mise en oeuvre d'un dispositif 20 de stimulation de puits selon l'invention.

Dans la suite de la description, on se place de manière non limitative dans le cas d'un dispositif 20 de stimulation mis en oeuvre pour améliorer la production d'un puits d'extraction de ressource souterraine. Toutefois, et tel qu'indiqué précédemment, on entend de manière générale, par « stimulation de puits », générer une onde de choc acoustique dans un puits naturel ou de forage. Une telle stimulation de puits peut être mise en oeuvre pour améliorer la production d'un puits d'extraction de ressource souterraine, mais également pour effectuer une étude sismologique, pour réaliser une fracturation de roche souterraine, etc.

Tel qu'illustré par la figure 2, le dispositif 20 de stimulation comporte un outil 200, de forme allongée, adapté à être introduit dans un puits 30 d'extraction obtenu par forage. Dans des modes particuliers de réalisation, l'outil 200 peut être formé par une pluralité de tronçons assemblés bout à bout de manière réversible.

Plus particulièrement, la figure 2 représente une vue en demi-coupe de l'outil 200, dans laquelle les deux extrémités dudit outil 200 sont représentées en coupe. L'outil 200 comporte notamment, au niveau d'une première extrémité, une tête de stimulation 210, introduite vers le bas dans le puits 30 d'extraction, et une seconde extrémité opposée à ladite tête de stimulation 210.

La tête de stimulation 210 comporte une cavité 213 fermée à l'intérieur de laquelle débouchent une première électrode 211 et une seconde électrode 212. La première électrode 211 et la seconde électrode 212 sont séparées par un fluide 214 confiné à l'intérieur de la cavité 213. La cavité 213 est fermée notamment par une paroi 215 flexible séparant le fluide 214, à l'intérieur de ladite cavité 213, et la ressource souterraine, à l'extérieur de ladite cavité. Le fluide 214 est électriquement conducteur et peut être considéré comme étant un élément résistif. Ledit fluide est par exemple un liquide tel que de l'eau, de résistance de l'ordre de 1000 ohm. Rien n'exclut, suivant d'autres exemples, d'avoir une tête de stimulation 210 avec une cavité ouverte, auquel cas le fluide est le fluide contenu en fond de puits.

Dans la suite de la description, on se place dans le cas où la cavité 213 est fermée. La valeur théorique de la résistance du fluide 214, c'est-à-dire la résistance dudit fluide en l'absence de détérioration de la tête de stimulation 210, est désignée ci-après par R_{F}.

L'outil 200 comporte également, par exemple au niveau de la seconde extrémité, un port d'alimentation comportant une première borne 201 et une seconde borne 202. La première borne 201 est reliée à la première électrode 211 par l'intermédiaire d'un premier circuit 203, et la seconde borne 202 est reliée à la seconde électrode 212 par l'intermédiaire d'un second circuit 204. Dans l'exemple non limitatif illustré par la figure 2, le premier circuit 203, par exemple une tige en laiton, correspond au niveau de la seconde extrémité à une âme centrale de l'outil 200. Le second circuit 204, par exemple en acier, correspond à une paroi périphérique de l'outil 200.

Le dispositif 20 de stimulation comporte une source électrique 220 connectée à la première borne 201 et à la seconde borne 202 de l'outil 200. La source électrique peut être une source de courant, une source de tension, etc.

Dans l'exemple non limitatif illustré par la figure 2, la source électrique 220 est externe à l'outil 200 et est connectée à la première borne 201 et à la seconde borne 202 par l'intermédiaire d'un câble électrique. Rien n'exclut, suivant d'autres modes de réalisation, d'avoir par exemple une source électrique 220 intégrée dans l'outil 200. Suivant d'autres exemples de réalisation, la source électrique 220 peut également être en partie seulement externe à l'outil 200, en étant distribuée en deux parties reliées par un câble électrique : une première partie externe à l'outil 200 et une seconde partie intégrée dans l'outil 200 et connectée à la première borne 201 et à la seconde borne 202 dudit outil 200.

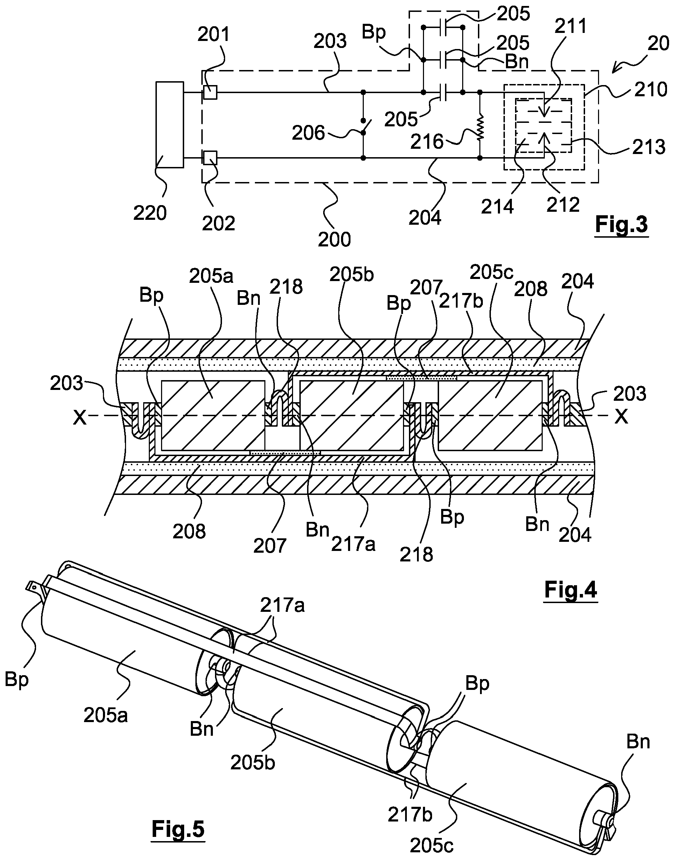

La figure 3 représente un schéma électrique des principaux composants électriques d'un mode particulier de réalisation de l'outil 200. Pour des raisons de clarté, l'agencement desdits composants électriques, c'est-à-dire la disposition desdits composants électriques dans l'espace, n'est pas pris en compte sur la figure 3.

Tel qu'illustré par la figure 3, le premier circuit 203 de l'outil 200 comporte plusieurs éléments capacitifs entre le port d'alimentation et la tête de stimulation 210. Dans l'exemple non limitatif illustré par la figure 3, l'outil 200 comporte trois éléments capacitifs 205a, 205b et 205c. Rien n'exclut, suivant d'autres exemples, de considérer un nombre différent d'éléments capacitifs, égal ou supérieur à deux.

Chaque élément capacitif 205a-205c comporte deux bornes de polarités respectives différentes agencées sur des faces de connexion respectives opposées dudit élément capacitif. Par convention, les bornes de polarités différentes de chaque élément capacitif 205a-205c sont désignées ci-après par respectivement « borne positive » Bp et « borne négative » Bn.

Les bornes positives Bp des trois éléments capacitifs 205a-205c sont connectées entre elles et les bornes négatives Bn des trois éléments capacitifs 205a-205c sont connectées entre elles. Par conséquent, lesdits éléments capacitifs 205a-205c sont électriquement en parallèle.

La figure 3 représente un mode préféré de réalisation dans lequel le dispositif 20 de stimulation comporte en outre des moyens de commutation adaptés à placer l'outil 200 dans au moins deux états :
- un état de charge dans lequel les bornes positives Bp des éléments capacitifs 205a-205c sont connectées à la première borne 201 de l'outil 200 et déconnectées de la seconde électrode 212, et dans lequel les bornes négatives Bn desdits éléments capacitifs sont connectées à la première électrode 211,
- un état de décharge dans lequel les bornes positives Bp desdits éléments capacitifs 205a-205c sont connectées à la seconde électrode 212, et dans lequel les bornes négatives Bn des éléments capacitifs 205a-205c sont connectées à la première électrode 211.

Dans l'exemple non limitatif illustré par la figure 3, les bornes positives Bp des éléments capacitifs 205a-205c sont connectées directement à la première borne 201 de l'outil 200, et les bornes négatives Bn desdits éléments capacitifs 205a-205c sont connectées directement à la première électrode 211 de la tête de stimulation 210. On entend par « connecté à » qu'un courant électrique peut circuler entre les éléments considérés. Par « connecté directement à », on entend que les éléments considérés sont connectés sans composant électrique intermédiaire.

En outre, les moyens de commutation comportent un commutateur 206 connecté d'une part à un point du premier circuit 203 situé entre la première borne 201 de l'outil 200 et les éléments capacitifs 205a-205c et, d'autre part, un point du second circuit 204 situé entre la seconde borne 202 de l'outil 200 et la seconde électrode 212 de la tête de stimulation 210. Le commutateur 206 comporte de manière conventionnelle un état ouvert, dans lequel aucun courant électrique ne circule entre les bornes dudit commutateur 206, et un état fermé dans lequel un courant électrique peut circuler entre lesdites bornes dudit commutateur 206.

Lorsque la source électrique 220 est connectée à la première borne 201 et à la seconde borne 202 de l'outil 200, on comprend donc que :
- lorsque le commutateur 206 est à l'état ouvert : chaque élément capacitif 205a-205c et la tête de stimulation 210 sont électriquement en série entre la première borne 201 et la seconde borne 202 de l'outil 200, de sorte que ladite source électrique 220 charge les éléments capacitifs 205a-205c à travers la tête de stimulation 210,
- lorsque le commutateur 206 est à l'état fermé : les éléments capacitifs 205a-205c se déchargent à travers la tête de stimulation 210.

Le passage du commutateur de l'état ouvert à l'état fermé est par exemple effectué lorsqu'une condition prédéfinie de décharge est obtenue. Par exemple, ladite condition prédéfinie est obtenue lorsque la tension aux bornes du commutateur 206 ou des éléments capacitifs 205a-205c atteint une valeur limite supérieure prédéfinie. Dans un tel cas, le commutateur 206 est avantageusement un éclateur dont la tension de claquage est choisie égale à ladite valeur limite supérieure prédéfinie, de sorte que l'éclateur passe automatiquement à l'état fermé dès que la tension à ses bornes atteint ladite valeur limite supérieure. D'autres exemples de réalisation sont cependant possibles. Suivant d'autres exemples non limitatifs, le dispositif 20 de stimulation peut comporter un module de commande qui contrôle le commutateur 206 en fonction de mesures de la tension aux bornes dudit commutateur 206 ou aux bornes des éléments capacitifs 205a-205c.

Il est à noter que l'invention est applicable à d'autres architectures électriques que celle illustrée par la figure 3, et est applicable de manière plus générale à toute architecture électrique comportant plusieurs éléments capacitifs électriquement en parallèle entre eux, y compris une architecture électrique du type illustré par la figure 1. L'architecture électrique de la figure 3 est toutefois avantageuse dans la mesure où, dans l'état de charge, un courant électrique circule dans la tête de stimulation 210, entre la première électrode 211 et la seconde électrode 212. De la sorte, toute modification des propriétés électriques de la tête de stimulation 210, et plus particulièrement de la résistance du fluide 214 (passage de la valeur théorique R_{F} à une valeur R_{Z}), peut en principe être détectée en observant un paramètre représentatif de ladite résistance dudit fluide 214. L'analyse dudit paramètre lorsque l'outil 200 est dans l'état de charge permet donc de déterminer un état de la tête de stimulation 210, par exemple détecter un comportement anormal susceptible d'être provoqué, dans le cas d'une cavité 213 fermée, par une déchirure de la paroi 215 flexible de ladite cavité 213.

De préférence, le paramètre observé est la puissance fournie à l'outil 200 par la source électrique 220. L'observation de la puissance est avantageuse, dans le cas d'une source électrique 220 au moins en partie externe à l'outil 200, dans la mesure où elle peut-être effectuée à distance de l'outil 200 (en surface), sans avoir à avoir à ajouter de capteur dédié de tension et/ou de courant dans ledit outil 200.

Dans un mode préféré de réalisation, également illustré par la figure 3, l'outil 200 comporte en outre un élément résistif 216 monté en parallèle avec la tête de stimulation 210, entre un point du premier circuit 203 situé entre les éléments capacitifs 205a-205c et la première électrode 211, et un point du second circuit 204 situé entre la seconde électrode 212 et le commutateur 206. L'élément résistif 216 est de préférence de résistance R_{S} au moins deux fois supérieure à la valeur théorique R_{F} de la résistance du fluide 214 séparant la première électrode 211 de la seconde électrode 212. De la sorte, le courant de charge et le courant de décharge des éléments capacitifs 205a-205c circulent principalement par l'intermédiaire du fluide 214.

L'élément résistif 216 permet d'assurer que l'intensité du courant de décharge des éléments capacitifs 205a-205c est toujours supérieure à une valeur limite inférieure prédéfinie. En effet, dans le cas par exemple d'une déchirure de la paroi 215 flexible d'une cavité 213 fermée, des éléments extérieurs, provenant du puits d'extraction, peuvent s'introduire dans la cavité 213 et modifier la résistance du fluide 214. Typiquement, la résistance du fluide 214 peut augmenter jusqu'à atteindre une valeur R_{Z} significativement supérieure à la valeur théorique R_{F}. Dans un tel cas, la décharge des éléments capacitifs 205a-205c est beaucoup plus lente voire impossible. Grâce à l'élément résistif 216 monté en parallèle avec la tête de stimulation 210, la résistance équivalente de l'ensemble constitué par ledit élément résistif 216 et la tête de stimulation 210 est donc toujours inférieure à R_{S}, de sorte que les éléments capacitifs 205a-205c peuvent toujours se décharger.

La figure 4 représente schématiquement l'agencement, conformément à l'invention, des trois éléments capacitifs 205a-205c de l'outil 200 de la figure 3. Tel qu'illustré par la figure 4, à l'intérieur de l'outil 200, les éléments capacitifs 205a-205c sont agencés en série avec leurs faces de connexion en regard, et agencés de telle sorte que les faces de connexion en regard de chaque paire d'éléments capacitifs 205a-205c adjacents correspondent à des bornes de même polarité positive Bp ou négative Bn.

Il est à noter que, lorsque l'outil 200 est formé par une pluralité de tronçons assemblés bout à bout de manière réversible, les trois éléments capacitifs ainsi agencés sont de préférence installés dans un même tronçon.

Plus particulièrement, dans l'exemple illustré par la figure 4, les bornes des éléments capacitifs 205a-205c sont toutes alignées suivant un même axe longitudinal X. Suivant ledit axe longitudinal X, on trouve tout d'abord le premier élément capacitif 205a, dont la borne positive Bp est connectée au premier circuit 203. On trouve ensuite le second élément capacitif 205b, intercalé entre ledit premier élément capacitif 205a et le troisième élément capacitif 205c. La face de connexion de la borne négative Bn du premier élément capacitif 205a fait face à la face de connexion de la borne négative Bn du second élément capacitif 205b. La face de connexion de la borne positive Bp du second élément capacitif 205b fait face à la face de connexion de la borne positive Bp du troisième élément capacitif 205c. On trouve ensuite, suivant ledit axe longitudinal X, le troisième élément capacitif 205c dont la borne négative Bn est connectée au premier circuit 203.

En outre, les bornes distantes de même polarité de chaque paire d'éléments capacitifs 205a-205c adjacents (c'est-à-dire les bornes de même polarité qui ne sont pas agencées sur des faces de connexion en regard) sont également connectées entre elles. A cet effet, sur la figure 4, la borne positive Bp du premier élément capacitif 205a est connectée aux bornes positives Bp des second et troisième éléments capacitifs 205b, 205c, et la borne négative Bn du troisième élément capacitif 205c est connectée aux bornes négatives Bn des premier et second éléments capacitifs 205a, 205b.

On comprend à la lecture de la figure 4 que, grâce à l'agencement des éléments capacitifs 205a-205c, la distance entre bornes de polarités différentes, entre lesquelles la tension électrique est maximale, est toujours supérieure à la longueur d'un élément capacitif 205a-205c. Le risque de formation d'arcs électriques entre bornes de polarités différentes est donc fortement réduit.

Dans des modes préférés de réalisation les moyens de connexion électrique, reliant les bornes distantes de même polarité de chaque paire d'éléments capacitifs 205a-205c adjacents, comportent au moins une liaison électriquement conductrice s'étendant le long de ladite paire d'éléments capacitifs 205a-205c. Dans l'exemple illustré par la figure 4, l'outil 200 comporte deux telles liaisons électriquement conductrices :
- une liaison 217a s'étendant longitudinalement le long des parois latérales des premier et second éléments capacitifs 205a, 205b, pour relier les bornes positives Bp,
- une liaison 217b s'étendant longitudinalement le long des parois latérales des second et troisième éléments capacitifs 205b, 205c, pour relier les bornes négatives Bn.

La liaison 217b est agencée du côté du second élément capacitif 205b opposé à la liaison 217a, afin de limiter le risque de formation d'arcs électriques entre lesdites liaisons 217a, 217b, reliées respectivement à des bornes positives Bp et à des bornes négatives Bn. En effet, par rapport à l'axe longitudinal X, la liaison 217a et la liaison 217b sont espacées radialement d'un angle de 180°. En considérant que chaque élément capacitif 205a-205c est un cylindre de section circulaire de rayon R, la distance entre les liaisons 217a, 217b est alors égale à π·R. Rien n'exclut, suivant d'autres exemples d'avoir un écart radial inférieur à 180°. Cet écart radial entre liaisons 217a, 217b reliant respectivement des bornes de polarités différentes est de préférence égal ou supérieur à 60°, afin d'assurer que la distance entre lesdites liaisons 217a, 217b est supérieure à R.

Dans un mode préféré de réalisation, illustré par la figure 4, l'outil 200 comporte des moyens 207 d'isolation électrique entre les liaisons 217a, 217b et les parois latérales des éléments capacitifs 205a-205c, au moins au niveau des jonctions entre éléments capacitifs adjacents. Lesdits moyens 207 d'isolation électrique sont par exemple des feuilles de polytéréphtalate d'éthylène (PET) ou de polyimide (PI), De telles dispositions permettent d'éviter la génération d'un arc électrique par rampage :
- entre d'une part la liaison 217a reliant les bornes de polarité positive Bp des premier et second éléments capacitifs 205a, 205b et, d'autre part, des moyens 218 de connexion électrique des bornes de polarité négative Bn desdits premier et second éléments capacitifs 205a, 205b,
- entre d'une part la liaison 217b reliant les bornes de polarité négative Bn des second et troisième éléments capacitifs 205b, 205c et, d'autre part, des moyens 218 de connexion électrique des bornes de polarité positive Bp desdits second et troisième éléments capacitifs 205b, 205c.

Dans l'exemple illustré par la figure 4, le second circuit 204 forme une paroi périphérique de l'outil 200 à l'intérieur de laquelle sont agencés les éléments capacitifs 205a-205c. Dans un tel cas, il est nécessaire de prévoir des moyens 208 d'isolation électrique entre ledit second circuit 204 et les liaisons 217a, 217b. Lesdits moyens 208 d'isolation électrique se présentent par exemple sous la forme d'un enroulement, autour desdits éléments capacitifs 205a-205c et desdites liaisons 217a, 217b, de feuilles de polytéréphtalate d'éthylène (PET) ou de polyimide (PI).

La figure 5 représente une variante de réalisation dans laquelle, pour chaque paire d'éléments capacitifs 205a-205c adjacents, les moyens de connexion électrique reliant les deux bornes distantes de même polarité comportent deux liaisons 217a, 217b électriquement conductrices. De telles dispositions permettent d'introduire une redondance au niveau des connexions électriques et de diminuer l'inductance équivalente du circuit.

Plus particulièrement, la borne positive Bp du premier élément capacitif 205a est reliée à la borne positive Bp du second élément capacitif 205b (et à la borne positive Bp du troisième élément capacitif 250c) par deux liaisons 217a. La borne négative Bn du troisième élément capacitif 205c est reliée à la borne négative Bn du second élément capacitif 205b (et à la borne négative Bn du premier élément capacitif 205a) par deux liaisons 217b.

Dans l'exemple illustré par la figure 5, les liaisons 217a reliant les bornes positives Bp sont espacées radialement d'environ 60°. Les liaisons 217b reliant les bornes négatives Bn sont également espacées radialement d'environ 60°. En outre, lesdites liaisons 217b reliant les bornes négatives Bn sont agencées du côté du second élément capacitif 205b opposé aux liaisons 217a reliant les bornes positives Bp, de sorte que l'écart radial minimal entre une liaison 217a reliant les bornes positives Bp et une liaison 217b reliant des bornes négatives Bn est d'environ 120°.

De manière plus générale, l'écart radial entre les liaisons 217a, 217b reliant les bornes de même polarité de chaque paire d'éléments capacitifs 205a-205c adjacents peut être différent de 60°. Dans des modes préférés de réalisation, cet écart radial est compris entre 10° et 90°, de sorte qu'il est possible d'assurer un écart radial suffisant entre liaisons 217a, 217b reliant respectivement des bornes de polarités différentes. En particulier, en agençant d'une part les liaisons 217a et, d'autre part, les liaisons 217b de part et d'autre des éléments capacitifs 205a-205c (tel qu'illustré par la figure 5), on assure que l'écart radial minimal entre une liaison 217a reliant les bornes positives Bp et une liaison 217b reliant des bornes négatives Bn est au moins de 90°.

Dans une variante de réalisation de l'outil 200 de la figure 5, chaque liaison 217a reliant les bornes positives Bp est intercalée entre les liaisons 217b reliant les bornes négatives Bn. Plus particulièrement, les liaisons 217a reliant les bornes positives Bp sont espacées radialement d'environ 180°, tout comme les liaisons 217b reliant les bornes négatives Bn. En outre les liaisons 217a reliant les bornes positives Bp sont agencées transversalement par rapport aux liaisons 217b reliant les bornes négatives Bn. De la sorte, l'écart radial entre chaque liaison 217a reliant les bornes positives Bp et les deux liaisons 217b reliant les bornes négatives Bn est d'environ 90°.

Dans des modes particuliers de réalisation, les liaisons 217a, 217b, reliant les bornes distantes de même polarité de chaque paire d'éléments capacitifs 205a-205c adjacents, sont rigides afin d'assurer en outre le maintien mécanique desdits éléments capacitifs 205a-205c entre eux. Rien n'exclut cependant, suivant d'autres exemples, d'avoir des liaisons 217a, 217b flexibles. Le cas échéant, le maintien mécanique des éléments capacitifs 205a-205c entre eux peut être réalisé en les plaçant à l'intérieur d'une paroi périphérique rigide (par exemple le second circuit 204 dans l'exemple illustré par la figure 4), à l'intérieur de laquelle est injectée une résine (par exemple une résine époxy).

Les moyens 218 de connexion électrique reliant les bornes de même polarité de faces de connexion en regard peuvent être rigides ou flexibles. Dans l'exemple illustré par les figures 4 et 5, ces moyens de connexion électrique sont flexibles et se présentent sous la forme de clinquants électriquement conducteurs.

Alternativement ou en complément aux modes de réalisation décrits ci-dessus, le maintien mécanique des éléments capacitifs 205a-205c entre eux peut être assuré par des entretoises rigides (non représentées sur les figures) disposées entre lesdits éléments capacitifs 205a-205c. De telles entretoises rigides sont de préférence en matériau électriquement isolant, tel qu'un matériau composite en résine époxy renforcée par des fibres de verre.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant trois éléments capacitifs électriquement en parallèle. Tel qu'indiqué précédemment, le nombre d'éléments capacitifs 205a-205c n'est pas limitatif, et l'invention est applicable dès lors que l'outil 200 comporte au moins deux éléments capacitifs électriquement en parallèle.

En outre, l'outil 200 peut comporter suivant d'autres exemples plusieurs ensembles d'éléments capacitifs, les éléments capacitifs étant électriquement en parallèle entre eux au sein d'un même ensemble. Dans un tel cas, tout ce qui a été décrit précédemment en référence aux trois éléments capacitifs 205a-205c est mis en oeuvre au sein d'au moins un ensemble d'éléments capacitifs, et de préférence au sein de chaque ensemble d'éléments capacitifs. Les différents ensembles d'éléments capacitifs sont par exemple installés dans des tronçons distincts de l'outil 200. Les éléments capacitifs d'ensembles différents peuvent être indifféremment électriquement en parallèle ou en série. Par exemple, l'outil 200 peut comporter plusieurs tronçons comportant chacun un ensemble de trois éléments capacitifs.

La description ci-avant illustre clairement que par ses différentes caractéristiques et leurs avantages, la présente invention atteint les objectifs qu'elle s'était fixés. En particulier, l'outil 200 de stimulation selon l'invention permet de limiter le risque de formation d'arcs électriques en amont de la tête de stimulation 210, grâce à un agencement avantageux des éléments capacitifs 205a-205c électriquement en parallèle.

## Revendications

1. Outil (200) de stimulation de puits comportant un port d'alimentation électrique, une tête de stimulation (210) et au moins deux éléments capacitifs (205a-205c) entre ledit port d'alimentation et ladite tête de stimulation, chaque élément capacitif comportant deux bornes (Bp, Bn) de polarités respectives différentes agencées sur des faces de connexion respectives opposées dudit élément capacitif, les bornes de même polarité desdits éléments capacitifs (205a-205c) étant connectées entre elles de sorte que lesdits éléments capacitifs sont électriquement en parallèle, **caractérisé en ce que** les éléments capacitifs (205a-205c) de l'outil (200) sont agencés en série avec leurs faces de connexion en regard, et de telle sorte que les faces de connexion en regard de chaque paire d'éléments capacitifs (205a-205c) adjacents correspondent à des bornes de même polarité.

2. Outil (200) selon la revendication 1, **caractérisé en ce que** les bornes distantes de même polarité de chaque paire d'éléments capacitifs (205a-205c) adjacents sont reliées par au moins une liaison (217a, 217b) s'étendant le long de ladite paire d'éléments capacitifs adjacents.

3. Outil (200) selon la revendication 2, **caractérisé en ce qu'**il comporte au moins trois éléments capacitifs (205a-205c), et **en ce que** les liaisons reliant les bornes de polarités différentes d'un même élément capacitif à des bornes respectives d'autres éléments capacitifs (205a-205c) sont espacées radialement d'un angle égal ou supérieur à 60°.

4. Outil (200) selon l'une des revendications 2 à 3, **caractérisé en ce que** les bornes distantes de même polarité de chaque paire d'éléments capacitifs (205a-205c) adjacents sont reliées par deux liaisons (217a, 217b) s'étendant le long de ladite paire d'éléments capacitifs adjacents et espacées radialement d'un angle égal à 180° ou compris entre 10° et 90°.

5. Outil (200) selon l'une des revendications 2 à 4, **caractérisé en ce qu'**il comporte des moyens d'isolation électrique entre chaque liaison (217a, 217b) de chaque paire d'éléments capacitifs (205a-205c) adjacents et des moyens (218) de connexion électrique des bornes de même polarité des faces de connexion en regard de ladite paire d'éléments capacitifs (205a-205c) adjacents.

6. Outil (200) selon l'une des revendications 2 à 5, **caractérisé en ce que** chaque liaison (217a, 217b) reliant les bornes distantes de même polarité de chaque paire d'éléments capacitifs (205a-205c) adjacents est rigide.

7. Outil (200) selon l'une des revendications 2 à 5, **caractérisé en ce que** chaque liaison (217a, 217b) reliant les bornes distantes de même polarité de chaque paire d'éléments capacitifs (205a-205c) adjacents est flexible, et **en ce que** les éléments capacitifs sont maintenus à l'intérieur d'une paroi (204) périphérique rigide de l'outil (200) par une résine.

8. Outil (200) selon l'une des revendications précédentes, **caractérisé en ce qu'**il comporte des entretoises entre les éléments capacitifs (205a-205c) adjacents.

9. Outil (200) selon l'une des revendications précédentes, **caractérisé en ce que** les éléments capacitifs (205a-205c) sont agencés à l'intérieur d'une paroi (204) périphérique électriquement conductrice de l'outil (200), ledit outil comportant des moyens d'isolation électrique entre ladite paroi périphérique et lesdits éléments capacitifs.

10. Outil (200) selon l'une des revendications précédentes, **caractérisé en ce qu'**il est formé par une pluralité de tronçons assemblés bout à bout de manière réversible, l'un des tronçons comportant plusieurs des éléments capacitifs (205a-205c) de l'outil (200).

11. Dispositif (20) de stimulation de puits comportant un outil (200) selon l'une des revendications précédentes, **caractérisé en ce qu'**il comporte une source électrique (220) connectée à une première borne (201) et à une seconde borne (202) du port d'alimentation, et des moyens (206) de commutation adaptés à placer l'outil (200) dans au moins deux états :
- un état de charge dans lequel chaque élément capacitif (205a-205c) et la tête de stimulation (210) sont électriquement en série entre la première borne et la seconde borne du port d'alimentation, de sorte que la source électrique (220) charge chaque élément capacitif (205a-205c) à travers la tête de stimulation (210),
- un état de décharge dans lequel chaque élément capacitif (205a-205c) se décharge à travers la tête de stimulation (210).

## Patentansprüche

1. Werkzeug (200) zum Stimulieren von Bohrlöchern, umfassend einen elektrischen Versorgungsanschluss, einen Stimulierungskopf (210) und mindestens zwei kapazitive Elemente (205a-205c) zwischen dem Versorgungsanschluss und dem Stimulierungskopf, wobei jedes kapazitive Element zwei Klemmen (Bp, Bn) mit jeweils unterschiedlichen Polaritäten umfasst, die auf jeweils gegenüberliegenden Anschlussflächen des kapazitiven Elements angeordnet sind, wobei die Klemmen derselben Polarität der kapazitiven Elemente (205a-205c) untereinander angeschlossen sind, so dass die kapazitiven Elemente elektrisch parallel sind, **dadurch gekennzeichnet, dass** die kapazitiven Elemente (205a-205c) des Werkzeugs (200) in Serie geschaltet sind, wobei ihre Anschlussflächen einander gegenüberliegen, so dass die einander gegenüberliegenden Anschlussflächen jedes Paars von aneinandergrenzenden kapazitiven Elementen (205a-205c) Klemmen derselben Polarität entsprechen.

2. Werkzeug (200) nach Anspruch 1, **dadurch gekennzeichnet, dass** die entfernten Klemmen derselben Polarität jedes Paars von aneinandergrenzenden kapazitiven Elementen (205a-205c) durch mindestens eine Verbindung (217a, 217b) verbunden sind, die sich entlang des Paars von aneinandergrenzenden kapazitiven Elementen erstreckt.

3. Werkzeug (200) nach Anspruch 2, **dadurch gekennzeichnet, dass** es mindestens drei kapazitive Elemente (205a-205c) umfasst, und dass die Verbindungen, die die Klemmen unterschiedlicher Polaritäten eines selben kapazitiven Elements mit jeweiligen Klemmen anderer kapazitiver Elemente (205a-205c) verbinden, radial um einen Winkel größer oder gleich 60° entfernt sind.

4. Werkzeug (200) nach einem der Ansprüche 2 bis 3, **dadurch gekennzeichnet, dass** die entfernten Klemmen derselben Polarität jedes Paars von aneinandergrenzenden kapazitiven Elementen (205a-205c) durch zwei Verbindungen (217a, 217b) verbunden sind, die sich entlang des Paars von aneinandergrenzenden kapazitiven Elementen erstrecken und radial um einen Winkel gleich 180° oder zwischen 10° und 90° entfernt sind.

5. Werkzeug (200) nach einem der Ansprüche 2 bis 4, **dadurch gekennzeichnet, dass** es elektrische Isolierungsmittel zwischen jeder Verbindung (217a, 217b) jedes Paars von aneinandergrenzenden kapazitiven Elementen (205a-205c) und elektrische Anschlussmittel (218) der Klemmen derselben Polarität der einander gegenüberliegenden Anschlussflächen des Paars von aneinandergrenzenden kapazitiven Elementen (205a-205c) umfasst.

6. Werkzeug (200) nach einem der Ansprüche 2 bis 5, **dadurch gekennzeichnet, dass** jede Verbindung (217a, 217b), die die entfernten Klemmen derselben Polarität jedes Paars von aneinandergrenzenden kapazitiven Elementen (205a-205b) verbindet, starr ist.

7. Werkzeug (200) nach einem der Ansprüche 2 bis 5, **dadurch gekennzeichnet, dass** jede Verbindung (217a, 217b), die die entfernten Klemmen derselben Polarität jedes Paars von aneinandergrenzenden kapazitiven Elementen (205a-205c) verbindet, flexibel ist, und dass die kapazitiven Elemente innerhalb einer starren Umfangswand (204) des Werkzeugs (200) durch ein Harz gehalten werden.

8. Werkzeug (200) nach einem der vorhergehenden Ansprüche, **dadurch gekennzeichnet, dass** es Querstreben zwischen den aneinandergrenzenden kapazitiven Elementen (205a-205c) umfasst.

9. Werkzeug (200) nach einem der vorhergehenden Ansprüche, **dadurch gekennzeichnet, dass** die kapazitiven Elemente (205a-205c) innerhalb einer elektrisch leitenden Umfangswand (204) des Werkzeugs (200) angeordnet sind, wobei das Werkzeug elektrische Isolierungsmittel zwischen der Umfangswand und den kapazitiven Elementen umfasst.

10. Werkzeug (200) nach einem der vorhergehenden Ansprüche, **dadurch gekennzeichnet, dass** es von einer Vielzahl von Abschnitten gebildet ist, die Stoß an Stoß auf reversible Weise zusammengefügt sind, wobei einer der Abschnitte mehrere kapazitive Elemente (205a-205c) des Werkzeugs (200) umfasst.

11. Vorrichtung (20) zum Stimulieren von Bohrlöchern, umfassend ein Werkzeug (200) nach einem der vorhergehenden Ansprüche, **dadurch gekennzeichnet, dass** sie eine elektrische Quelle (220) umfasst, die an eine erste Klemme (201) und an eine zweite Klemme (202) des Versorgungsanschlusses angeschlossen ist, und Umschaltmittel (206), die geeignet sind, das Werkzeug (200) in mindestens zwei Zuständen anzuordnen:
- einem Ladezustand, in dem jedes kapazitive Element (205a-205c) und der Stimulierungskopf (210) elektrisch in Serie zwischen der ersten Klemme und der zweiten Klemme des Versorgungsanschlusses geschaltet sind, so dass die elektrische Quelle (220) jedes kapazitive Element (205a-205c) über den Stimulierungskopf (210) lädt,
- einem Entladezustand, in dem sich jedes kapazitive Element (205a-205c) über den Stimulierungskopf (210) entlädt.

## Claims

1. A tool (200) for the stimulation of wells comprising an electric power supply port, a stimulation head (210) and at least two capacitive elements (205a-205c) between said power supply port and said stimulation head, each capacitive element comprising two terminals (Bp, Bn) of respectively different polarities arranged on respectively opposite connection faces of said capacitive element, the terminals of the same polarity of said capacitive elements (205a-205c) being connected together such that said capacitive elements are electrically in parallel, **characterized in that** the capacitive elements (205a-205c) of the tool (200) are arranged in series with their connection faces facing each another, and such that the connection faces facing each other of each pair of adjacent capacitive elements (205a-205c) correspond to terminals of the same polarity.

2. The tool (200) as claimed in claim 1, **characterized in that** the remote terminals of the same polarity of each pair of adjacent capacitive elements (205a-205c) are connected by at least one link (217a, 217b) extending along said pair of adjacent capacitive elements.

3. The tool (200) as claimed in claim 2, **characterized in that** it comprises at least three capacitive elements (205a-205c), and **in that** the links between the terminals of different polarities of the same capacitive element to respective terminals of other capacitive elements (205a-205c) are spaced apart radially by an angle equal to or greater than 60°.

4. The tool (200) as claimed in any one of claims 2 to 3, **characterized in that** the remote terminals of the same polarity of each pair of adjacent capacitive elements (205a-205c) are connected by two links (217a, 217b) extending along said pair of adjacent capacitive elements and radially spaced by an angle equal to 180° or between 10° and 90°.

5. The tool (200) as claimed in any one of claims 2 to 4, **characterized in that** it comprises electrical insulation means between each link (217a, 217b) of each pair of adjacent capacitive elements (205a-205c) and electrically connecting means (218) of the terminals of the same polarity of the connection faces facing each other of said pair of adjacent capacitive elements (205a-205c).

6. The tool (200) as claimed in any one of claims 2 to 5, **characterized in that** each link (217a, 217b) connecting the remote terminals of the same polarity of each pair of adjacent capacitive elements (205a-205c) is rigid.

7. The tool (200) as claimed in any one of claims 2 to 5, **characterized in that** each link (217a, 217b) connecting the remote terminals of the same polarity of each pair of adjacent capacitive elements (205a-205c) is flexible, and **in that** the capacitive elements are retained inside a rigid peripheral wall (204) of the tool (200) by a resin.

8. The tool (200) as claimed in any one of the preceding claims, **characterized in that** it comprises spacers between the adjacent capacitive elements (205a-205c).

9. The tool (200) as claimed in one of the preceding claims, **characterized in that** the capacitive elements (205a-205c) are arranged within an electrically conductive peripheral wall (204) of the tool (200), said tool comprising electrical insulation means between said peripheral wall and said capacitive elements.

10. The tool (200) as claimed in any one of the preceding claims, **characterized in that** it is formed by a plurality of sections assembled end to end in a reversible manner, one of the sections comprising a plurality of the capacitive elements (205a-205c) of the tool (200).

11. A well stimulating device (20) comprising a tool (200) as claimed in any one of the preceding claims, **characterized in that** it comprises an electrical source (220) connected to a first terminal (201) and to a second terminal (202) of the power supply port, and switching means (206) adapted to place the tool (200) in at least two states:
- a charging state wherein each capacitive element (205a-205c) and the stimulation head (210) are electrically in series between the first terminal and the second terminal of the power supply port, so that the power source (220) charges each capacitive element (205a-205c) through the stimulation head (210),
- a discharging state wherein each capacitive element (205a-205c) discharges through the stimulation head (210).
